# EUROPEAN PATENT SPECIFICATION

(11) **EP 2 420 307 B1**
(45) Date of publication and mention of the grant of the patent: **16.12.2015**
(21) Application number: 11177823.9
(22) Date of filing: 17.08.2011
(51) Int. Cl.: A63F 13/31, A63F 13/23, G06F 3/01, A63F 13/327, A63F 13/332, A63F 13/235

(54) **Multiplatform gaming system**
Mehrplattform-Spielesystem
Système de jeu à plusieurs plateformes

(30) Priority: 17.08.2010 US 857681; 17.08.2011 KR 20110081546
(43) Date of publication of application: 22.02.2012
(73) Proprietor: Samsung Electronics Co., Ltd., Suwon-si, Gyeonggi-do, 443-742 (KR)
(72) Inventor: Engolz, Ofir, Yaqum (IL); Toledano, Eyal, Yaqum (IL)
(74) Representative: Birchenough, Lewis

(56) References cited:
- WO-A1-2008/084893
- WO-A1-2009/148827
- WO-A2-2008/092233
- GB-A- 2 430 332
- US-A1- 2008 242 414
- US-A1- 2010 016 079
- Anonymous: "Remote Play - Wikipedia, the free encyclopedia", , 9 August 2010 (2010-08-09), XP055199380, Retrieved from the Internet: URL:https://en.wikipedia.org/w/index.php?t itle=Remote_Play&oldid=443904151 [retrieved on 2015-07-01]

## Description

### FIELD OF THE INVENTION

The present invention relates to gaming systems. More particularly, the invention relates to gaming systems that employ more than one platform and wherein one of the one or more platforms is a mobile communication device.

### BACKGROUND OF THE INVENTION

Computerized games which involve the use of mobile communication devices, such as mobile phones, and a large screen, such as a TV screen together on the same platform are beginning to appear in the art. Yet, so far no solution has been provided that enables an interaction between the mobile communication device and additional platforms, such as (but not limited to) a TV, Media center, Blueray or WMG.

One example of existing systems is WeeWheel, which is a mobile application that uses the built-in accelerometer of the mobile device to detect movement and to convert it into a joystick, mouse and/or keyboard signals for a PC, so it is possible to play games by only moving the phone. Additional details of this system can be found in the following URLs:
http://www.persian-forums.com/f81/weewheel-v1-18-s60v3-v5-use-your-mobile-phone-pc-joystick-control-pc-games-32069
http://www.youtube.com/watch?v=iAWuYgD-njY

An additional example is US Patent Application 20090322676, which relates to a remote wand for controlling the operations of a media system. The wand may be operative to control the movement of a cursor displayed on screen by the position and orientation at which the wand is held. As the user moves the wand, the on-screen cursor may move. The user may use the wand to control a plurality of operations and applications that may be available from the media system, including for example zoom operations, a keyboard application, an image application, an illustration application, and a media application.

EP 2420307 describes a technique for controlling a game console system using a mobile station. User interface characteristics of the mobile station are identified and a game controller application based on the identified characteristics is provided to the mobile station.

US 2010/0016079 describes a technique for connecting a handheld device to an accessory device to assist in gameplay in conjunction with a host device. The handheld device may be physically attached to the accessory device and used as a personal display and input device for the user of the accessory during gameplay.

US 2008/0242414 describes a communication device that can be used as a gaming device. The device comprises a gyration sensor for sensing a motion of the device. Signals representing the sensed motion and other input data are transmitted to a game console.

The prior art solutions do not enable the smooth transfer between different communication channels and do not offer a gaming platform that can operate both as an inter-device platform and as a standalone platform. Furthermore, the prior art solutions do not enable running of the game on the mobile device alone. It is therefore an object of the present invention to provide a system that overcomes the above-mentioned drawbacks of the prior art.

It is a further object of the invention to provide a multiplatform system that allows running a game on the mobile device alone, or in cooperation with additional platform, such as a WiFi-enabled TV.

### SUMMARY OF THE INVENTION

In accordance with an aspect of the present invention, there is provided a multiplatform gaming system comprising: a mobile communication device provided with circuitry for communicating over one or more communication channels, wherein the mobile communication device is configured for running software for receiving inputs from one or more sensors of the mobile communication device, and for transmitting control data based on the inputs over a communication channel; and a gaming platform provided with a display, wherein the gaming platform is configured for running software for receiving the control data and for controlling the behavior of a game according to the control data; wherein the gaming platform is configured for running gaming software representing a synthetic reality; wherein the mobile communication device is configured for running gaming software corresponding to the gaming software run on the gaming platform; and wherein the mobile communication device is configured for running the gaming software when no communication channel is available between the mobile communication device and the gaming platform, and the gaming platform is configured for running the gaming software when a communication channel is available between the mobile communication device and the gaming platform.

An exemplary embodiment of the present invention provides a multiplatform gaming system comprising in combination:
(a) a mobile communication device provided with circuitry suitable to communicate over one or more communication channels;
(b) software provided in said mobile device to receive inputs from one or more sensors of the device, and to transmit control data relying on said inputs over a communication channel; and
(c) a gaming platform provided with a display, which platform runs software suitable to receive said control data and to control the behavior of a game according to such control data.

In certain exemplary embodiments, the mobile communication device is a mobile phone. In certain exemplary embodiments, said one or more sensors are selected from among accelerometers, cameras and microphones.

Another exemplary embodiment of the present invention provides a gaming system wherein the mobile device is suitable to run gaming software representing a synthetic reality essentially the same as run on the gaming platform. In one embodiment of the gaming platform of the invention the mobile communication device is configured to run the gaming software comprising the synthetic reality when no communication channel is available between it and the gaming platform, and to run control software that activates essentially the same gaming software on the gaming platform, when communication is available between them.

In certain exemplary embodiments, the gaming platform is provided with circuitry suitable to switch the running of the gaming software automatically between the mobile communication device and the gaming platform, according to the availability of the communication channel.

Another exemplary embodiment of the present invention provides a gaming system comprising in combination:
(a) a mobile communication device;
(b) software provided in said mobile device to receive inputs from one or more image sensors of the device, and to transmit control data relying on said inputs to a mobile gaming client operated by it; and
(c) a display, which is suitable to display an image comprising one or more markers related to one or more augmented reality image(s) that can be displayed on the display of said mobile device.

### BRIEF DESCRIPTION OF THE DRAWINGS

In the drawings:
Fig. 1 shows a mobile device operating as a controller;
Fig. 2 illustrates the court ruling of an airplane on a large screen using the mobile device in a single player game;
Fig. 3 shows a game played as a multiplayer platform; and
Figs. 4 (A and B) and 5 illustrate an augmented reality game.

### DETAILED DESCRIPTION OF THE INVENTION

The invention enables the use of a combined platform, i.e. one or more mobile devices and a second device such as, but not limited to, a TV, Media center, Blueray, or WMG, as an inter-device gaming platform that can be separated into a standalone gaming platform.

Thus, the invention enables a continuing playing platform between different devices and different communication channels and the shifting between different communication channels without having to stop the game.

### Example

The invention will be illustrated through the following example relating to a specific gaming platform. As will be apparent to the skilled person, the invention is not limited to any specific game or design, which is described hereinafter only for the purpose of illustration. The invention will be further described using a mobile phone as the mobile communication device, it being understood that other mobile devices, such as PDAs or the like can be used instead.

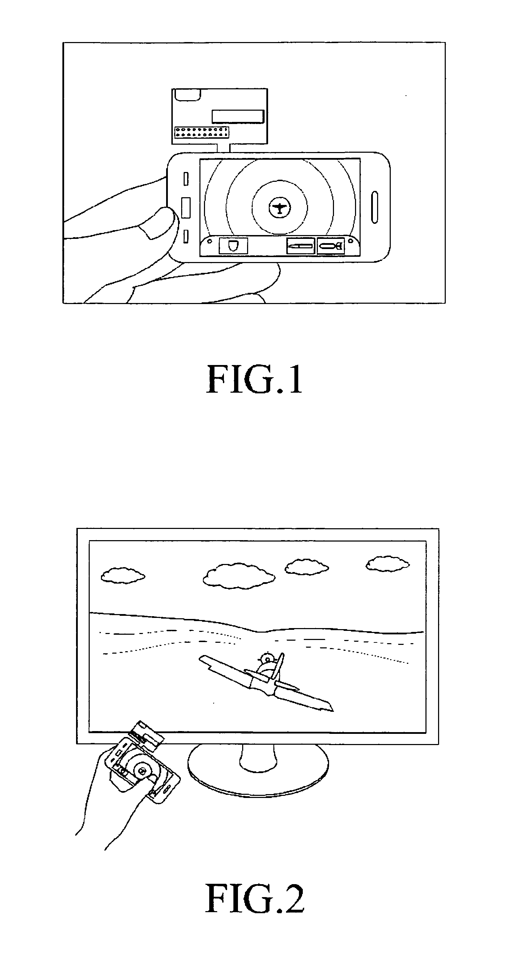

In the exemplary game the mobile device, which in the example is a mobile phone, is used as a controller of an airplane that takes part in the game. A WiFi-enabled TV is used in this example. Fig. 1 shows the mobile phone when used as the controller of the game. In Fig. 2 the TV screen shows the airplane, which is part of the game, flying in a virtual world. The mobile phone displays a radar and cockpit flight controllers. The player uses the mobile phone to navigate in the air and to shoot down targets.

The Controller uses the accelerometer and gyro systems that are imbedded in the mobile phone to simulate the real pitch yaw and roll angles of the plane direction. The user interface allows the user to operate simulated buttons to activate weapons, e.g. to fire guns and release bombs. In this example all data is sent through a specific network protocol via WiFI communication channel to the TV system. The specific protocol is not described herein for the sake of brevity, since it is not essential to the invention because, as will be apparent to the skilled person, different protocols can be devised to carry out the invention. The following is an illustrative and non-limitative example of a suitable protocol.

### Client - Server network protocol:

The Server sends the following data package to each client:
Plane Position [X,Y]
Plane Orientation [X,Y]
# of Ships alive
# Plane Power up
# of Plane Shields
# of Plane explosive Bullets
# of Plane health
# of Plane Bombs
Player score
Opponents score ― Will be 0 if it is a single player game.

This data package will be referred to hereinafter as "STATUS Message".

The Client sends the following data package to the Server

Gyro/Accelerometer Event parameters [x,y] Weapon shot type

The Server calculates, according to the client data, the position, collision, score, health etc.

The application running on the TV, which as described above can also alternatively be applied to other platforms such as (WMG, BlueRay, etc), receives the navigation and play command from the mobile phone via WiFi, and changes the airplane direction on the screen.

The game can be played as a single player game or as a multi-player game. The TV can communicate with several players through the network protocol. The Server protocol can be the same for multi-player and single player, and therefore the Server protocol detailed above is used for this example, i.e.:
**For each client:** Send STATUS Message.
If it is only a single player game than the opponent score is 0.

Thus the communication protocol on the Server's side is the same for both cases.

As stated, the game takes advantage of features available in the mobile phone, such as accelerometer, camera, microphone, gyro and more, to enable both visual and maneuvering control of the element played, which in the example is the control of the airplane.

In this example the server application running on the TV sends to the client application running on the mobile device, a datagram containing the status of enemies, rewards location, health and shield status as described in the "Server-Client network protocol" above.

The touch screen of the mobile phone shows the controlling buttons, and the player activates the different features through a simple button press on the touch screen. When the player leaves the WIFI/TV area, he can continue to play the game on his mobile phone as a stand-alone platform. In this situation the world simulated before on the TV will now appear on the mobile device screen.

In order to switch from single/multi player mode to Stand-Alone mode, the following is performed:
**On the Client side:** Stop sending datagram to server.
**On the Server side:** The Server is disabled - no communication takes place.

Similarly, if the user plays the game as a stand-alone application on its mobile device and while playing connects to the TV, the game switches to multi-platform game.

In order to switch from stand alone mode to single/multi-player mode the following is performed:
**On the Client side:** Send IP to the server for "hand-shake" connection.
**On the Server side:** Create a communication channel and Send a STATUS Message to the client.

### Augmented Reality Game

The invention also enables the playing of augmented reality games. In this scenario, a static image is displayed on a stand-alone display device (i.e. a TV to which the image can be transmitted using the DLNA standard). According to this embodiment of the invention the images viewed on the mobile device are reality-augmented images, relative to the images viewed on the stand-alone display device.

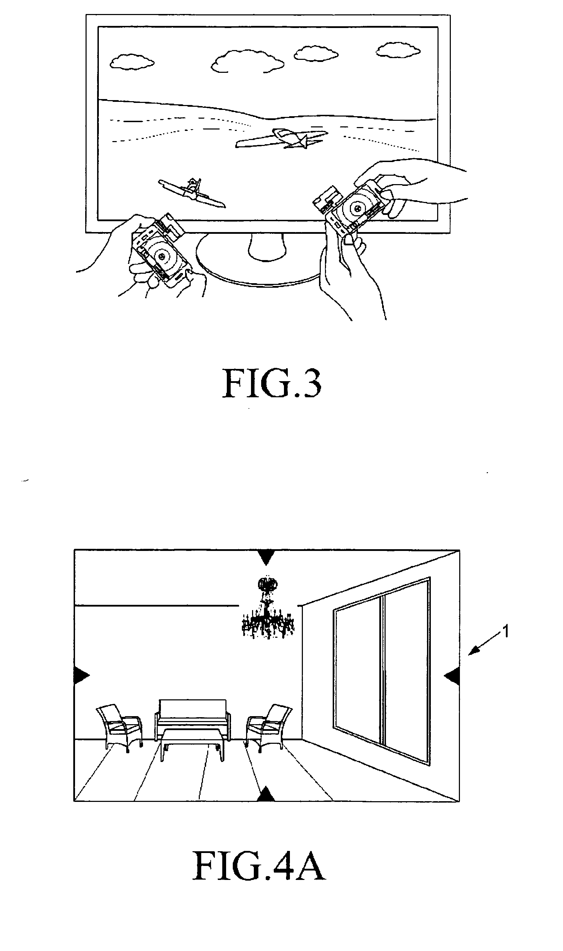

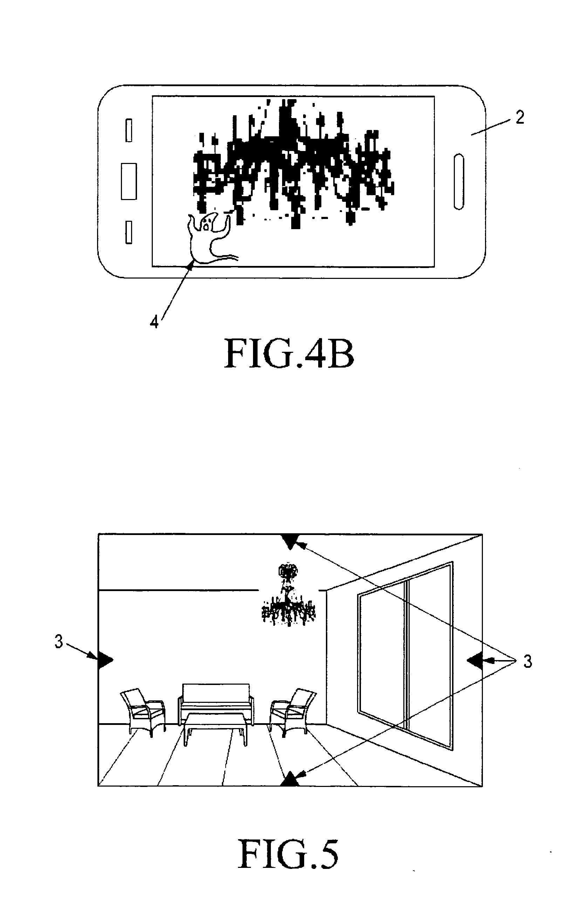

An example of this alternative embodiment is shown in Fig. 4. Fig. 4A shows a TV screen 1 displaying a static image, and Fig 4B shows the image as seen on a mobile device 2.

The image shown on the stand-alone display device 1 (in this case, a TV set) consists of special markers (Red/Blue triangles, collectively shown in Fig. 5 as numeral 3). The mobile device that operates the mobile client uses its camera to acquire the image displayed on the TV screen and recognizes the markers via image processing. The markers 3 "tell" the client to which part of the image on the TV screen the user is pointing at.

The user can then see 3D game elements (i.e. in this example "ghosts" 4 - Fig. 4B) on his mobile controller, as illustrated in Fig. 4. Those elements are not seen on the TV screen 1 (since it displays a static image).

The mobile client application recognizes the "location" the user is looking at (according to the markers 3 as explained above). It then un-hides 3D elements (i.e. ghosts 4) and displays them on the screen of the mobile device. The mobile client application holds data regarding the position and status of all entities (i.e. ghosts) of the game and displays the relevant entities according to the location/position of the game. In this manner the user is introduced to the 3D world containing the 3D entities. The user's position in the 3D world is defined by the target acquired from the image obtained by mobile device's camera.

Finding the 3D position protocol:
1. Obtain image from mobile device camera.
2. Process the 2D image, and find a "target point" according to red/blue markers.
3. Convert a 2D point to a 3D position in the 3D world.
4. Display 3D elements in the 3D world, relative to the user's 3D location.

All the above description and example have been provided for the purpose of illustration and are not intended to limit the invention in any way. As will be apparent to the skilled person that is no limitation to the type of game that can be used or to the type of platform that can be coupled with the mobile communication device, and any such alternatives are intended to form part of the present invention.

## Claims

1. A multiplatform gaming system comprising:
- a mobile communication device provided with circuitry for communicating over one or more communication channels, wherein the mobile communication device is configured for running software for receiving inputs from one or more sensors of the mobile communication device, and for transmitting control data based on the inputs over a communication channel; and
- a gaming platform provided with a display, wherein the gaming platform is configured for running software for receiving the control data and for controlling the behaviour of a game according to the control data;
wherein the gaming platform is configured for running gaming software representing a synthetic reality;
wherein the mobile communication device is configured for running gaming software corresponding to the gaming software run on the gaming platform; and
wherein the mobile communication device is configured for running the gaming software when no communication channel is available between the mobile communication device and the gaming platform, and the gaming platform is configured for running the gaming software when a communication channel is available between the mobile communication device and the gaming platform.

2. A gaming system according to claim 1, wherein the mobile communication device is a mobile phone.

3. A gaming system according to claim 1, wherein the one or more sensors comprise one or more of: an accelerometer; a camera; and a microphone.

4. A gaming system according to claim 1, wherein the mobile communication device is configured for running control software that activates the gaming software on the gaming platform when a communication channel is available between the mobile communication device and the gaming platform.

5. A gaming system according to claim 1, wherein circuitry is provided for switching the running of the gaming software automatically between the mobile communication device and the gaming platform, according to the availability of the communication channel.

## Patentansprüche

1. Multiplattform-Spielsystem, das Folgendes umfasst:
- eine mobile Kommunikationsvorrichtung, die mit einer Schaltung für die Kommunikation über einen oder mehrere Kommunikationskanäle ausgerüstet ist, wobei die mobile Kommunikationsvorrichtung für Folgendes konfiguriert ist: Ausführen von Software zum Empfangen von Eingaben von einem oder mehreren Sensoren der mobilen Kommunikationsvorrichtung und Übertragen von Steuerdaten basierend auf den Eingaben über einen Kommunikationskanal; und
- eine Spielplattform, die mit einer Anzeige versehen ist, wobei die Spielplattform dafür konfiguriert ist, Software auszuführen, um die Steuerdaten zu empfangen und das Verhalten eines Spiels gemäß den Steuerdaten zu steuern;
wobei die Spielplattform dafür konfiguriert ist, Spielsoftware auszuführen, die eine synthetische Realität darstellt;
wobei die mobile Kommunikationsvorrichtung dafür konfiguriert ist, Spielsoftware entsprechend der Spielsoftware auszuführen, die auf der Spielplattform ausgeführt wird; und
wobei die mobile Kommunikationsvorrichtung dafür konfiguriert ist, die Spielsoftware auszuführen, wenn zwischen der mobilen Kommunikationsvorrichtung und der Spielplattform kein Kommunikationskanal zur Verfügung steht, und die Spielplattform dafür konfiguriert ist, die Spielsoftware auszuführen, wenn zwischen der mobilen Kommunikationsvorrichtung und der Spielplattform ein Kommunikationskanal zur Verfügung steht.

2. Spielsystem nach Anspruch 1, wobei die mobile Kommunikationsvorrichtung ein Mobiltelefon ist.

3. Spielsystem nach Anspruch 1, wobei der eine oder die mehreren Sensoren eines oder mehrere von Folgendem umfassen: einen Beschleunigungsmesser, eine Kamera und ein Mikrofon.

4. Spielsystem nach Anspruch 1, wobei die mobile Kommunikationsvorrichtung zum Ausführen von Steuerungssoftware konfiguriert ist, die die Spielsoftware auf der Spielplattform aktiviert, wenn zwischen der mobilen Kommunikationsvorrichtung und der Spielplattform ein Kommunikationskanal zur Verfügung steht.

5. Spielsystem nach Anspruch 1, wobei eine Schaltung bereitgestellt ist, die das Ausführen der Spielsoftware automatisch zwischen der mobilen Kommunikationsvorrichtung und der Spielplattform abhängig von der Verfügbarkeit des Kommunikationskanals umschaltet.

## Revendications

1. Un système de jeu multiplateforme comprenant :
- un dispositif de communication mobile équipé d'un circuit destiné à une communication par l'intermédiaire d'un ou de plusieurs canaux de communication, où le dispositif de communication mobile est configuré de façon à exécuter un logiciel destiné à la réception d'entrées provenant d'un ou de plusieurs capteurs du dispositif de communication mobile et à la transmission de données de commande basées sur les entrées par l'intermédiaire d'un canal de communication, et
- une plateforme de jeu équipée d'un dispositif d'affichage, où la plateforme de jeu est configurée de façon à exécuter un logiciel destiné à la réception des données de commande et à la commande du comportement d'un jeu selon les données de commande,
où la plateforme de jeu est configurée de façon à exécuter un logiciel de jeu représentant une réalité synthétique,
où le dispositif de communication mobile est configuré de façon à exécuter un logiciel de jeu correspondant au logiciel de jeu exécuté sur la plateforme de jeu, et
où le dispositif de communication mobile est configuré de façon à exécuter le logiciel de jeu lorsqu'aucun canal de communication n'est disponible entre le dispositif de communication mobile et la plateforme de jeu, et la plateforme de jeu est configurée de façon à exécuter le logiciel de jeu lorsqu'un canal de communication est disponible entre le dispositif de communication mobile et la plateforme de jeu.

2. Un système de jeu selon la Revendication 1, où le dispositif de communication mobile est un téléphone mobile.

3. Un système de jeu selon la Revendication 1, où les un ou plusieurs capteurs comprennent un ou plusieurs éléments parmi : un accéléromètre, une caméra et un microphone.

4. Un système de jeu selon la Revendication 1, où le dispositif de communication mobile est configuré de façon à exécuter un logiciel de commande qui active le logiciel de jeu sur la plateforme de jeu lorsqu'un canal de communication est disponible entre le dispositif de communication mobile et la plateforme de jeu.

5. Un système de jeu selon la Revendication 1, où un circuit est fourni pour une commutation automatique de l'exécution du logiciel de jeu entre le dispositif de communication mobile et la plateforme de jeu selon la disponibilité du canal de communication.
